# EUROPÄISCHE PATENTANMELDUNG

(11) **EP 2 727 677 A1**
(43) Veröffentlichungstag der Anmeldung: **07.05.2014**
(21) Anmeldenummer: 12190783.6
(22) Anmeldetag: 31.10.2012
(51) Int. Cl.: B23H 1/04

(54) **Verfahren zum Rekonturieren wenigstens einer Erodierelektrode und Rekonturiersystem**

(71) Anmelder: MTU Aero Engines AG, 80995 München (DE)
(72) Erfinder: Huber, Norbert, 82216 Überacker (DE); Kohl, Walter, 86316 Friedberg (DE); Bayer, Erwin, 85221 Dachau (DE)

(57) **Zusammenfassung**

Die Erfindung betrifft ein Verfahren zum Rekonturieren wenigstens einer Erodierelektrode (16), die zum erosiven Materialabtrag durch Spannungspulse im Bereich eines zu bearbeitenden Werkstücks (38) angeordnet wird, wobei zwischen der Erodierelektrode (16) und dem Werkstück (38) ein Opferelement (28) angeordnet wird, wonach durch Anlegen einer Spannung so lange eine Rekonturierung der Erodierelektrode (16) durch Erosion einer dem Opferelement (28) zugewandten Fläche der Erodierelektrode (16) an dem als Opferanode fungierenden Opferelement (28) durchgeführt wird, bis das Opferelement (28) durcherodiert ist. Ein weiterer Aspekt der Erfindung betrifft ein Rekonturiersystem (20) zum Rekonturieren wenigstens einer Erodierelektrode (16), die zum erosiven Materialabtrag durch Spannungspulse im Bereich eines zu bearbeitenden Werkstücks (38) anordenbar ist.

## Beschreibung

Die Erfindung betrifft ein Verfahren zum Rekonturieren wenigstens einer Erodierelektrode, die zum erosiven Materialabtrag durch Spannungspulse im Bereich eines zu bearbeitenden Werkstücks angeordnet wird. Weiterhin betrifft die Erfindung ein Rekonturiersystem zum Rekonturieren wenigstens einer Erodierelektrode sowie die Verwendung des Verfahrens und Rekonturiersystems bei der Herstellung wenigstens eines Dichtschlitzes in einem aerodynamischen Strukturbauteil.

Erodierverfahren sind abtragende Fertigungsverfahren für leitfähige Materialien, die auf elektrischen Entladevorgängen zwischen wenigstens einer Erodierelektrode und einem zu bearbeitenden Werkstück aus einem elektrisch leitfähigen Material beruhen. Insbesondere Werkstücke aus hochtemperaturfesten Legierungen, beispielsweise Lauf- oder Leitschaufeln für Gasturbinen, können mit zerspanenden Verfahren häufig nicht mehr ohne weiteres bearbeitet werden. Daher werden derartige Werkstücke zum Erodieren in eine dielektrische Flüssigkeit wie beispielsweise Mineralöl oder deionisiertes Wasser gegeben oder mit einer dielektrischen Flüssigkeit umspült. Anschließend wird eine Erodierelektrode im zu bearbeitenden Bereich des Werkstücks angeordnet, so dass sich ein schmaler Spalt ausbildet. Ist der Spalt zu groß, findet keine ausreichende Ionisierung der dielektrischen Flüssigkeit und damit kein Materialabtrag statt. Ist der Spalt zu klein, besteht die Gefahr, dass die Erodierelektrode und das Werkstück miteinander verschweißen. Durch die Erzeugung von Spannungspulsen werden überschlagende Funken zwischen der Erodierelektrode und dem Werkstück erzeugt, wodurch das Material des Werkstücks aufschmilzt bzw. verdampft und durch die dielektrische Flüssigkeit abtransportiert wird. Je nach Intensität, Frequenz, Dauer, Länge, Spaltbreite und Polung der Spannungspulse entstehen auf diese Weise unterschiedliche Oberflächenkonturen im Werkstück. Da das Erodierverfahren zu einem Abbild der Erodierelektrode im Werkstück führt, ist die Kontur der Erodierelektrode ausschlaggebend für die zu erzeugende Kontur im Werkstück. Das Material der Erodierelektrode richtet sich meistens nach dem zu bearbeitenden Werkstoff und besteht in der Regel aus Kupfer oder Graphit.

Beim Erodieren wird aber nicht nur Material vom bearbeiteten Werkstück, sondern auch von der Erodierelektrode abgetragen, wodurch sich die Erodierelektrode mit der Zeit abnutzt und verschleißt. Dies führt zu einer veränderten Kontur der Erodierelektrode, wodurch sich die Maßhaltigkeit und Qualität der erosiven Bearbeitung verschlechtern. Durch den Elektrodenabbrand geht mit anderen Worten die Konturgenauigkeit verloren, so dass beispielsweise Dichtspalte für Dichtbleche zwischen Schaufelkomponenten von Gasturbinen nicht mehr die erforderliche Genauigkeit aufweisen können. Dies kann später zu Leistungsverlusten während des Betriebs eines zugeordneten Triebwerks führen. Um die Maßhaltigkeit des Erodierverfahrens sicherzustellen, muss daher sichergestellt werden, dass die Erodierelektrode die geforderte Kontur aufweist.

In manchen Anwendungsgebieten werden daher "Einmalelektroden" verwendet, die, nachdem sie verschlissen sind, durch neue Erodierelektroden ersetzt werden. Die Verwendung von derartigen Einmalelektroden ist jedoch extrem teuer und wegen des häufigen Ein- und Ausbaus sehr zeit- und personalaufwändig, so dass üblicherweise versucht wird, die vorhandene Erodierelektroden möglichst häufig zu rekonturieren. Das Rekonturieren von verschlissenen Erodierelektroden erfolgt üblicherweise mechanisch, indem Abbrand, Fehlkonturen und dergleichen manuell abgefeilt werden. Dies ist jedoch wegen des notwendigen Aus- und Einbaus der Erodierelektroden ebenfalls mit hohem Zeit- und Personalbedarf verbunden und führt darüber hinaus zu relativ ungenauen Ergebnissen und hohem Elektrodenverschleiß. Zusätzlich besteht die Gefahr der Beschädigung von dünnwandigen und komplexen Elektrodengeometrien.

Aus der EP 1 808 251 A1 ist ein Verfahren zum Rekonturieren verschlissener Erodierelektroden bekannt, bei welchem die elektrischen Parameter der Spannungspulse derart eingestellt werden, dass der Materialabtrag im Wesentlichen an der Erodierelektrode und nicht am Werkstück erfolgt.

Als nachteilig an dem bekannten Verfahren ist aber der Umstand anzusehen, dass hierdurch eine gewisse Gefahr besteht, dass das Werkstück beschädigt wird. Darüber hinaus können mit diesem Verfahren keine Erodierelektroden rekonturiert werden, die über das Werkstück hinausragen. Derartige Erodierelektroden sind aber erforderlich, um beispielsweise offene Schlitze in das Werkstück einzubringen. Schließlich ist das Verfahren sehr aufwändig, da die Rekonturierung permanent überwacht werden muss, um die elektrischen Parameter korrekt einzustellen und den Fortschritt der Rekonturierung der Erodierelektrode sowie den Zustand des Werkstücks zu kontrollieren.

Aufgabe der vorliegenden Erfindung ist es, ein Verfahren zum Rekonturieren wenigstens einer Erodierelektrode zu schaffen, welches flexibler einsetzbar und zeit- und kostengünstig durchführbar ist. Eine weitere Aufgabe der Erfindung ist es, ein entsprechendes Rekonturiersystem zu schaffen, mittels welchem wenigstens eine Erodierelektrode flexibler und zeit- und kostengünstig rekonturierbar ist. Weiterhin ist es Aufgabe der Erfindung, eine entsprechende Verwendung des Verfahrens und/oder Rekonturiersystems anzugeben.

Die Aufgaben werden erfindungsgemäß durch ein Verfahren mit den Merkmalen des Patentanspruchs 1, durch ein Rekonturiersystem gemäß Anspruch 10, sowie durch eine Verwendung gemäß Anspruch 16 gelöst. Vorteilhafte Ausgestaltungen mit zweckmäßigen Weiterbildungen der Erfindung sind in den jeweiligen Unteransprüchen angegeben, wobei vorteilhafte Ausgestaltungen des Verfahrens als vorteilhafte Ausgestaltungen des Rekonturiersystems und umgekehrt anzusehen sind.

Ein erster Erfindungsaspekt betrifft ein Verfahren zum Rekonturieren wenigstens einer Erodierelektrode, wobei das Verfahren flexibler einsetzbar und zeit- und kostengünstig durchführbar ist, indem zwischen der Erodierelektrode und dem Werkstück ein Opferelement angeordnet wird, wonach durch Anlegen einer Spannung so lange eine Rekonturierung der Erodierelektrode durch Erosion einer dem Opferelement zugewandten Fläche der Erodierelektrode an dem als Opferanode fungierenden Opferelement durchgeführt wird, bis das Opferelement durcherodiert ist. Mit anderen Worten ist es erfindungsgemäß vorgesehen, zum Rekonturieren der wenigstens einen Erodierelektrode ein als Opferanode fungierendes Opferelement zu verwenden, welches anstelle des Werkstücks erodiert wird, wobei das Rekonturieren erst dann beendet wird, wenn das Opferelement im Bereich der zu rekonturierenden Fläche der Erodierelektrode vollständig durcherodiert ist. Die Rekonturierung der Erodierelektrode erfolgt somit durch das gleichzeitige Erodieren der Erodierelektrode und des Opferelements. Es versteht sich, dass auch beim Rekonturieren eine dielektrische Flüssigkeit zwischen der Erodierelektrode und dem Opferelement vorzusehen ist. Das Verfahren kann kraftfrei und daher ohne Beschädigung des Werkstücks durchgeführt werden. Aufgrund der einfachen Anpassbarkeit des Opferelements ist zudem eine besonders einfache und präzise Rekonturierung der Erodierelektrode ermöglicht, wodurch sich zusätzlich erhebliche Einsparung von Elektrodenmaterial ergeben. Das Material und die Geometrie des Opferelements sowie die elektrischen Parameter beim Rekonturieren werden dabei grundsätzlich derart gewählt, dass sichergestellt ist, dass die Erodierelektrode spätestens dann die gewünschte Kontur aufweist, wenn das Opferelement vollständig durcherodiert wurde. Da das erfindungsgemäße Verfahren einfach in bereits etablierte Erodierverfahren integriert werden kann und da weder ein Ein- oder Ausbau der Erodierelektrode, noch ein Ausbau des durcherodierten Opferelements erforderlich sind, ergibt sich ein besonders geringer Zeit- und Personalaufwand. Darüber hinaus ist das Verfahren vollständig automatisierbar und kann dadurch besonders einfach, zuverlässig und präzise durchgeführt werden. Angesichts der bekannten Dimensionen des Opferelements ist es dabei vorteilhafter Weise immer bekannt, wann die Erodierelektrode in das unterhalb des Opferelements angeordnete Werkstück eindringt und dass die Erodierelektrode beim Eindringen in das Werkstück die korrekte Kontur aufweist. Dementsprechend kann auf zusätzliche Mess- und Regeltechnik zur Prozesssteuerung vorteilhaft verzichtet werden. Grundsätzlich kann vorgesehen sein, dass mehrere Erodierelektroden mit Hilfe eines Opferelements rekonturiert werden. Alternativ oder zusätzlich können grundsätzlich auch mehrere einzelne Opferelemente zum Rekonturieren einer Erodierelektrode verwendet werden. Ebenso kann vorgesehen sein, dass mehrere Opferelemente zum Rekonturieren mehrerer Erodierelektroden verwendet werden. Dabei kann grundsätzlich vorgesehen sein, dass ein Opferelement für mehrere Rekonturierungsvorgänge verwendet wird. Da das Opferelement bei jeder Rekonturierung vollständig durcherodiert wird, muss es allerdings für jedes folgenden Rekonturierungsverfahren neu gegenüber der Erodierelektrode ausgerichtet werden, um der zu rekonturierenden Fläche der Erodierelektrode eine entsprechend erodierbare Fläche des Opferelements gegenüberstellen zu können. Alternativ kann vorgesehen sein, dass ein Opferelement nur für einen einzigen Rekonturierungsverfahren verwendet und anschließend ersetzt wird.

In einer vorteilhaften Ausgestaltung der Erfindung ist vorgesehen, dass das Opferelement zum Rekonturieren der Erodierelektrode mittels einer Haltevorrichtung zwischen der Erodierelektrode und dem Werkstück angeordnet wird und/oder dass das Opferelement nach dem Rekonturieren in der Haltevorrichtung belassen wird. Mit Hilfe einer Haltevorrichtung kann das Opferelement auf einfache Weise zum Rekonturieren zwischen dem Werkstück und der Erodierelektrode positioniert bzw. wieder entfernt werden. Eine Haltevorrichtung ermöglicht dabei eine besonders schnelle, präzise und automatisierbare Anordnung und Ausrichtung des Opferelements, wobei vorzugsweise eine Haltevorrichtung verwendet wird, in welche das Opferelement einfach eingeschoben bzw. aus welcher das verbrauchte Opferelement wieder herauszogen werden kann. Zu diesem Zweck kann beispielsweise eine Haltevorrichtung verwendet werden, welche eine Halteeinrichtung mit entsprechenden Schiebeführungselementen aufweist. Besondere Zeit- und Kostenvorteile ergeben sich dabei dadurch, dass das Opferelement nach dem Rekonturieren in der Haltevorrichtung belassen wird. Dies erlaubt es, das unterhalb des Opferelements angeordnete Werkstück nach dem Rekonturieren der Erodierelektrode und dem vollständigen Durcherodieren des Opferelements durch fortgesetztes Absenken der Erodierelektrode unmittelbar weiterzubearbeiten, ohne dass weitere Ein- oder Ausbaumaßnahmen erforderlich wären. Weiterhin kann vorgesehen sein, dass die gesamte Haltevorrichtung beweglich an der Erodierelektrode und/oder am Werkstück gelagert wird und nach Bedarf zwischen einer Ruheposition, in welcher das Opferelement aus dem Bereich zwischen der Erodierelektrode und dem Werkstück entfernt ist, und einer Rekonturierungsposition, in welchem das Opferelement zwischen der Erodierelektrode und dem Werkstück angeordnet ist, verschwenkt, verschoben oder anderweitig bewegt wird.

Weitere Vorteile ergeben sich, wenn ein Opferelement mit einer mehreckigen und/oder runden und/oder ovalen Querschnittsgeometrie verwendet wird. Insbesondere ein rechteckiges Opferelements ist besonders einfach herstellbar und kann rein translatorisch zwischen die Erodierelektrode und das Werkstück geschoben werden. Dies ermöglicht eine besonders einfache, schnelle und gut automatisierbare Anordnung des Opferelements zwischen der Erodierelektrode und dem Werkstück. Grundsätzlich kann die Form des Opferblechs aber auch spezifisch an die jeweiligen geometrischen Gegebenheiten, beispielsweise an spezifische Formen der Erodierelektrode und/oder des Werkstücks angepasst sein.

In einer weiteren vorteilhaften Ausgestaltung der Erfindung ist vorgesehen, dass das Opferelement während des Rekonturierens am Werkstück anliegt. Hierdurch kann vorteilhaft vermieden werden, dass sich beim Rekonturieren der Erodierelektrode und gegebenenfalls bei einem anschließenden Erodieren des Werkstücks mittels der rekonturierten Erodierelektrode ein Spalt zwischen Opferelement und Werkstück ausbildet, der zu Inhomogenitäten oder sonstigen Beeinträchtigungen des Erodierprozesses führen könnte. Darüber hinaus sorgt ein Anliegen des Opferelements am Werkstück auf einfache Weise für klar definierte geometrische Gegebenheiten, so dass das Ende des Rekonturierungsverfahrens und der Beginn des anschließenden erosiven Verfahrens prozesssicher vorgegeben sind.

In einer weiteren vorteilhaften Ausgestaltung der Erfindung ist vorgesehen, dass ein Opferelement verwendet wird, welches aus dem gleichen Material wie die Erodierelektrode besteht und/oder welches aus einem Material besteht, das ausgewählt ist aus einer Gruppe, die Wolframkarbid, Wolfram-Kupfer-Legierungen, Wolfram-Silber-Legierungen, Wolfram, Kupfer, Messing, Hartmetalle, Graphit, Zink-Legierungen und Chrom-plattierte Materialien umfasst. Hierdurch kann das Erodierverhalten des Opferelements besonders präzise an die jeweiligen Materialeigenschaften der Erodierelektrode und gegebenenfalls des Werkstücks angepasst werden, so dass eine besonders schnelle und präzise Rekonturierung der Erodierelektrode ermöglicht wird. Die Verwendung eines Opferelements, das aus dem gleichen Material wie die Erodierelektrode besteht, bietet den Vorteil, dass keine Fremdionen in die dielektrische Flüssigkeit übergehen.

Weitere Vorteile ergeben sich, indem eine relative Anordnung zwischen der Erodierelektrode und dem Opferelement während des Rekonturierens wenigstens einmal verändert wird. Hierdurch kann spezifischen Abnutzungserscheinungen der Erodierelektrode besonders gut Rechnung getragen werden, wodurch die Rekonturierung entsprechend schnell und präzise durchgeführt werden kann. Beispielsweise kann das Opferelement zusammen mit und/oder unabhängig vom Werkstück während des Rekonturierens gegenüber der Erodierelektrode um einen vorgebbaren Winkel verschwenkt oder entlang einer vorgebbaren Strecke verschoben werden. Dabei kann vorgesehen sein, dass eine Haltevorrichtung für das Opferelement verwendet wird, welche ausgelegt ist, das Opferelement relativ zur Erodierelektrode zu verschwenken, zu verschieben oder anderweitig zu bewegen.

In einer weiteren vorteilhaften Ausgestaltung der Erfindung ist vorgesehen, dass ein Opferelement verwendet wird, welches eine Oberflächenkontur aufweist, die an eine Oberflächenkontur der zu rekonturierenden Erodierelektrode angepasst ist. Mit anderen Worten ist es vorgesehen, dass das Opferelement eine strukturierte Oberfläche besitzt. Auch dies stellt eine konstruktiv einfache und kostengünstige Möglichkeit dar, um unterschiedliche Elektrodenkonturen optimal zu berücksichtigen und möglichst schnell und präzise zu rekonturieren.

In einer weiteren vorteilhaften Ausgestaltung der Erfindung ist vorgesehen, dass als Werkstück ein aerodynamisches Strukturbauteil, insbesondere eine Schaufel und/oder ein Schaufelsegment eines Verdichters und/oder einer Turbine und/oder eines Kompressors verwendet wird. Hierdurch können die durch das erfindungsgemäße Verfahren realisierbaren Zeit- und Kostenvorteile im Zusammenhang mit der Herstellung besonders komplexer und anspruchsvoller Werkstücke aus ansonsten nicht zufrieden stellend bearbeitbaren Materialien realisiert werden. Durch die hohe erzielbare Fertigungspräzision aufgrund der rekonturierten Erodierelektrode wird zudem sichergestellt, dass das aerodynamische Strukturbauteil eine hohe Maßhaltigkeit besitzt, wodurch sich ein entsprechend verbesserter Wirkungsgrad eines dem aerodynamischen Strukturbauteil zugeordneten Triebwerks, beispielsweise einer thermischen Gasturbine realisieren lässt.

In einer weiteren vorteilhaften Ausgestaltung der Erfindung ist vorgesehen, dass die Erodierelektrode nach dem Rekonturieren zum Erodieren des Werkstücks, insbesondere zum Herstellen eines Dichtschlitzes im Werkstück verwendet wird. Auch dies stellt eine Möglichkeit dar, die durch das erfindungsgemäße Verfahren realisierbaren Zeit- und Kostenvorteile im Zusammenhang mit der Herstellung besonders komplexer und anspruchsvoller Werkstücke aus ansonsten nicht zufrieden stellend bearbeitbaren Materialien realisiert werden. Im Rahmen des erfindungsgemäßen Verfahrens kann die Erodierelektrode hierzu nach dem Durcherodieren des Opferelements einfach durch die entstandene Öffnung im Opferelement in Richtung des darunter liegenden Werkstücks weiterbewegt werden, wodurch erhebliche Zeit-, Personal- und Kosteneinsparungen ermöglicht sind.

Ein zweiter Aspekt der Erfindung betrifft ein Rekonturiersystem zum Rekonturieren wenigstens einer Erodierelektrode, die zum erosiven Materialabtrag durch Spannungspulse im Bereich eines zu bearbeitenden Werkstücks anordenbar ist. Das erfindungsgemäße Rekonturiersystem umfasst dabei eine Haltevorrichtung, welche einen Grundkörper mit wenigstens einer Montageöffnung zum Anordnen der Erodierelektrode an der Haltevorrichtung und wenigstens eine Halteeinrichtung zum Halten eines Opferelements an der Haltevorrichtung aufweist, wobei das Rekonturiersystem ausgelegt ist, das Opferelement als Opferanode zwischen der Erodierelektrode und dem Werkstück anzuordnen und das Opferelement unter Erosion einer dem Opferelement zugewandten Fläche der Erodierelektrode durchzuerodieren. Das erfindungsgemäße Rekonturiersystem ermöglicht es daher im Unterschied zum Stand der Technik, die wenigstens eine Erodierelektrode besonders flexibel sowie zeit- und kostengünstig zu rekonturieren, da ein einfach an die jeweilige Erodierelektrode anpassbares Opferelement verwendet und als Opferanode lediglich zwischen der Erodierelektrode und dem zu bearbeitenden Werkstück angeordnet werden muss. Das Opferelement kann anschließend unter Rekonturierung der dem Opferelement zugewandten Fläche der Erodierelektrode vollständig durcherodiert werden, so dass die Erodierelektrode unmittelbar im Anschluss an die Rekonturierung zum Erodieren des unter dem Opferelement angeordneten Werkstücks verwendet werden kann. Das Opferelement muss nach dem Rekonturieren nicht entfernt werden, wodurch sich erhebliche Zeit-, Personal- und Kosteneinsparungen ergeben. Die Halteeinrichtung kann dabei grundsätzlich als separates Bauteil oder in den Grundkörper integriert ausgebildet sein. Weitere sich ergebende Vorteile sind den Beschreibungen des ersten Erfindungsaspekts zu entnehmen, wobei vorteilhafte Ausgestaltungen des ersten Erfindungsaspekts als vorteilhafte Ausgestaltungen des zweiten Erfindungsaspekts und umgekehrt anzusehen sind.

In einer vorteilhaften Ausgestaltung der Erfindung ist vorgesehen, dass der Grundkörper der Haltevorrichtung wenigstens eine Montagbohrung und/oder wenigstens ein Halteelement zum lösbaren Festlegen der Haltevorrichtung am Werkstück umfasst. Die wenigstens eine Montagebohrung kann beispielsweise zum Verschrauben oder zum anderweitigen Festlegen der Haltevorrichtung an der Erodierelektrode, dem Werkstück oder einem weiteren Bauteil verwendet werden. Hierdurch kann eine besonders exakte Ausrichtung und Anordnung der Haltevorrichtung und damit der Erodierelektrode und des Opferelements erzielt werden. Soll die Haltevorrichtung stets an gleichen oder ähnlichen Werkstücken befestigt werden, ermöglicht ein entsprechend ausgebildetes Halteelement eine besonders einfache und schnelle Anordnung und lösbare Festlegung der Haltevorrichtung am Werkstück.

Weitere Vorteile ergeben sich dadurch, dass die Haltevorrichtung wenigstens ein Federelement umfasst, mittels welchem das in der Halteeinrichtung angeordnete Opferelement mit einer Haltekraft beaufschlagbar ist. Dies stellt eine konstruktiv besonders einfache und kostengünstige Möglichkeit dar, um das Opferelement relativ zur Haltevorrichtung an dieser durch eine Art Klemmverbindung lösbar festzulegen. Ebenso kann vorgesehen sein, dass das Opferelement mit Hilfe des wenigstens einen Federelements gegen das Werkstück gedrückt wird, so dass es flächig an diesem anliegt. Alternativ oder zusätzlich kann vorgesehen sein, dass das Opferelement anderweitig, beispielsweise durch Verschrauben oder dergleichen an der Haltevorrichtung befestigt werden kann. Weiterhin kann alternativ oder zusätzlich vorgesehen sein, dass die Haltevorrichtung wenigstens eine Klemmschraube umfasst, mittels welcher das in der Halteeinrichtung angeordnete Opferelement lösbar an der Halteeinrichtung festlegbar ist. Dies stellt eine konstruktiv besonders einfache und schnelle Möglichkeit dar, um das Opferelement nach seiner Positionierung lösbar festzulegen und bei Bedarf neu zu positionieren oder auszutauschen.

In einer weiteren vorteilhaften Ausgestaltung der Erfindung ist vorgesehen, dass die Montageöffnung eine mit einer Querschnittskontur der Erodierelektrode korrespondierende Querschnittskontur und/oder eine schlitzartige, T-förmige, L-förmige, C-förmige, S-förmige, runde, ovale oder mehreckige Querschnittskontur aufweist. Hierdurch kann die Erodierelektrode besonders einfach und präzise an bzw. in der Haltevorrichtung positioniert werden, indem beispielsweise die Haltevorrichtung auf die Erodierelektrode aufgesteckt wird.

Weitere Vorteile ergeben sich, indem das Rekonturiersystem Führungsmittel umfasst, mittels welchen die Haltevorrichtung relativ zum Werkstück positionierbar und in der eingestellten Position am Werkstück festlegbar ist. Dies ermöglicht eine besonders einfache und präzise Ausrichtung der Haltevorrichtung und des Opferelements gegenüber dem Werkstück. Die Führungsmittel können dabei derart ausgebildet sein, dass das Opferelement während des Rekonturierens ein- oder mehrfach neu gegenüber der Erodierelektrode ausgerichtet werden kann. Weiterhin können die Führungsmittel auch derart ausgebildet sein, dass anschließend an das Rekonturieren ein Erodierverfahren durchgeführt werden kann.

Ein dritter Aspekt der Erfindung betrifft die Verwendung eines Verfahrens nach einem der vorhergehenden Ausführungsbeispiele und/oder eines Rekonturiersystems nach einem der vorhergehenden Ausführungsbeispiele bei der Herstellung wenigstens eines Dichtschlitzes in einem aerodynamischen Strukturbauteil, insbesondere im Rahmen eines Triebwerksbaus, bei der Herstellung einer Turbine, insbesondere einer Gasturbine, und/oder bei der Herstellung eines Kompressors. Bei dem aerodynamischen Strukturbauteil kann es sich beispielsweise um eine Schaufel und/oder ein Schaufelsegment eines Verdichters und/oder einer Turbine und/oder eines Kompressors handeln. Hierdurch können die durch das erfindungsgemäße Verfahren und/oder durch das erfindungsgemäße Rekonturiersystem realisierbaren Zeit- und Kostenvorteile im Zusammenhang mit der Herstellung besonders komplexer und anspruchsvoller Werkstücke aus ansonsten schwer bearbeitbaren Materialien realisiert werden. Durch die hohe erzielbare Fertigungspräzision aufgrund der einfach rekonturierbaren Erodierelektrode wird dabei sichergestellt, dass das aerodynamische Strukturbauteil eine hohe Maßhaltigkeit besitzt, wodurch sich ein entsprechend verbesserter Wirkungsgrad eines dem aerodynamischen Strukturbauteil zugeordneten Turbine, insbesondere einer Gasturbine, eines Flugzeugtriebwerks oder dergleichen, und/oder eines dem aerodynamischen Strukturbauteil zugeordneten Kompressors realisieren lässt.

Weitere Merkmale der Erfindung ergeben sich aus den Ansprüchen, den Ausführungsbeispielen sowie anhand der Zeichnungen. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen verwendbar, ohne den Rahmen der Erfindung zu verlassen. Dabei zeigt:
- Fig. 1: eine schematische Perspektivansicht eines Schaufelsegments für ein Flugzeugtriebwerk;
- Fig. 2: eine vergrößerte Darstellung des in Fig. 1 gezeigten Details II;
- Fig. 3: eine vergrößerte Darstellung des in Fig. 1 gezeigten Details III;
- Fig. 4: eine schematische Perspektivansicht einer erfindungsgemäßen Haltevorrichtung;
- Fig. 5: eine schematische Unteransicht der Haltevorrichtung;
- Fig. 6: eine schematische Perspektivansicht eines erfindungsgemäßen Rekonturiersystems;
- Fig. 7: eine schematische seitliche Schnittansicht des Rekonturiersystems;
- Fig. 8: eine schematische Perspektivansicht des Schaufelsegments, an welchem das Rekonturiersystem angeordnet ist;
- Fig. 9: eine schematische seitliche Schnittansicht des Rekonturiersystems mit einer verschlissenen Erodierelektrode, wobei ein Opferelement aus der Haltevorrichtung herausgezogen ist;
- Fig. 10: eine schematische Perspektivansicht und eine schematische seitliche Schnittansicht des Rekonturiersystems, wobei das Opferelement in die Haltevorrichtung hineingeschoben ist;
- Fig. 11: ein schematischer Querschnitt durch das Rekonturiersystem während des Rekonturierens der Erodierelektroden;
- Fig. 12: eine schematische Aufsicht des Rekonturiersystems während des Rekonturierens der Erodierelektroden;
- Fig. 13: eine schematische seitliche Schnittansicht des Rekonturiersystems mit rekonturierten Erodierelektroden;
- Fig. 14: ein schematischer Querschnitt durch das Rekonturiersystem während eines an das Rekonturieren anschließenden Erodierverfahrens;
- Fig. 15: eine schematische Perspektivansicht der Haltevorrichtung mit Halteelementen zum lösbaren Festlegen der Haltevorrichtung am Werkstück;
- Fig. 16: eine weitere schematische Perspektivansicht der in Fig. 15 gezeigten Haltevorrichtung;
- Fig. 17: eine schematische Perspektivansicht eines weiteren Ausführungsbeispiels des Rekonturiersystems, das an einem Werkstück angeordnet ist;
- Fig. 18: eine schematische Schnittansicht der in Fig. 17 gezeigten Anordnung des Rekonturiersystems am Werkstück; und
- Fig. 19: eine vergrößerte Ansicht des in Fig. 18 gezeigten Details XIX.

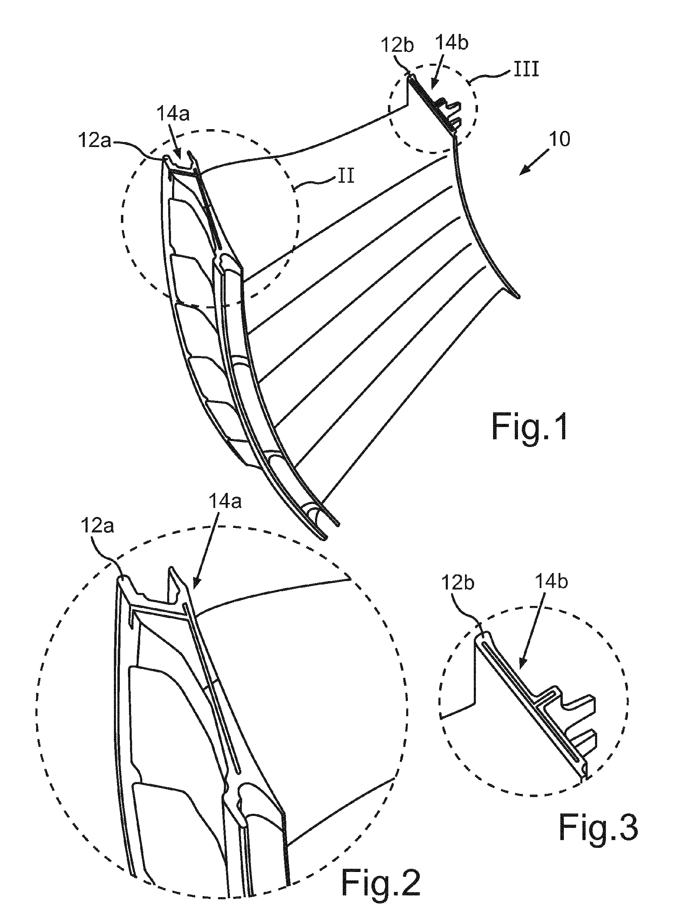

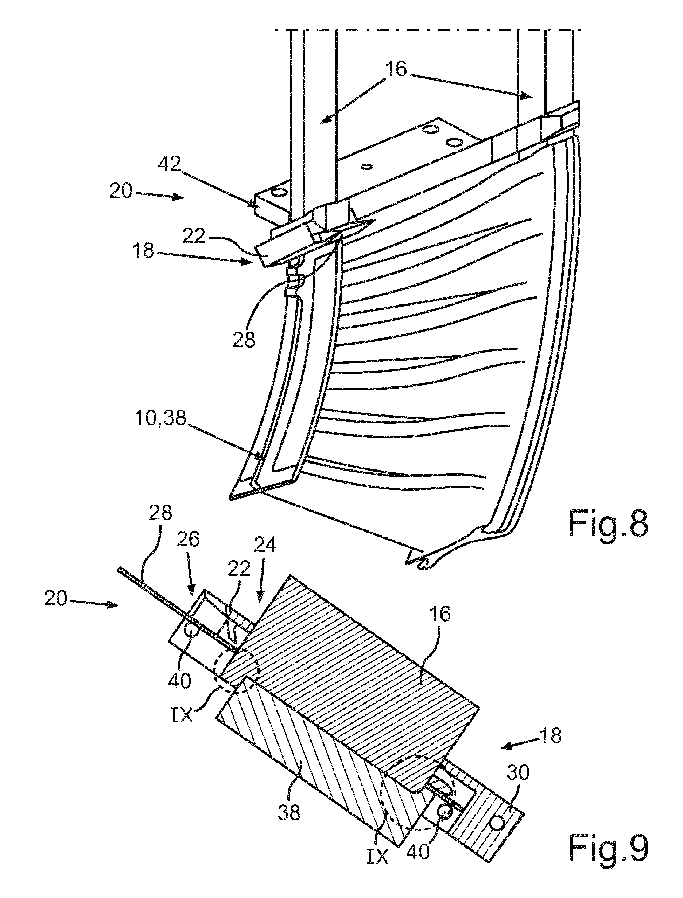

Fig. 1 eine schematische Perspektivansicht eines Schaufelsegments 10 für ein Flugzeugtriebwerk und wird im Folgenden in Zusammenschau mit Fig. 2 und Fig. 3 erläutert werden, wobei Fig. 2 eine vergrößerte Darstellung des in Fig. 1 gezeigten Details II und Fig. 3 eine vergrößerte Darstellung des in Fig. 1 gezeigten Details III zeigen. Der grundsätzliche Aufbau des Schaufelsegments 10, bei welchem es sich um ein aerodynamisches Strukturbauteil handelt, ist aus dem Stand der Technik bekannt und wird daher nicht näher erläutert werden. Man erkennt, dass das Schaufelsegment 10 seitlich an seinem radial oberen Deckband 12a einen offenen Dichtschlitz 14a und seitlich an seinem radial inneren Deckband 12b einen außenumfänglich geschlossen Dichtschlitz 14b aufweist. Da das Schaufelsegment 10 aus einem hochtemperaturstabilen und nicht oder nur schwer spanend bearbeitbaren Material besteht, beispielsweise aus einer Nickel-, Kobalt-, Titan- oder Eisenbasislegierung, werden die Dichtschlitze 14a, 14b mit Hilfe eines an sich bekannten Erodierverfahrens in die Seiten der Deckbänder 12a, 12b eingebracht. Die hierzu verwendeten Erodierelektroden 16 nutzen sich dabei mit der Zeit ab und verschleißen in Abhängigkeit der Dichtschlitzkontur (s. Fig. 9).

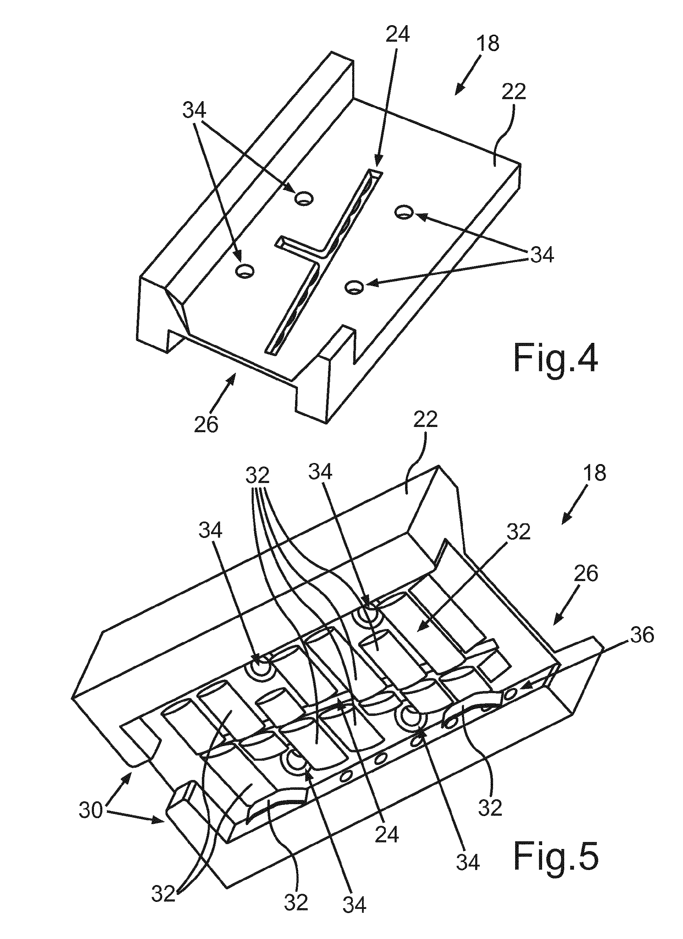

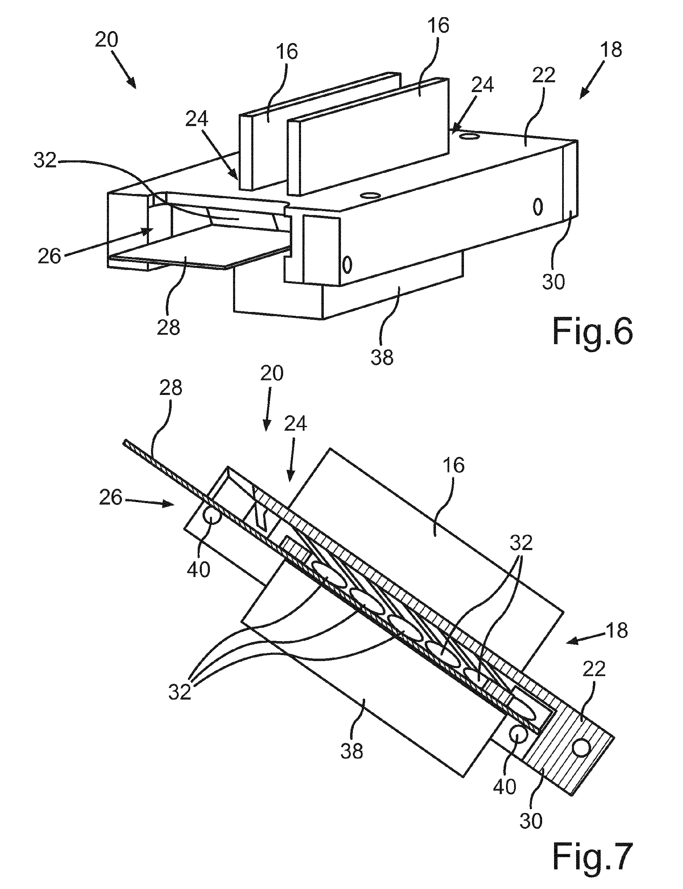

Um eine möglichst hohe Fertigungspräzision zu gewährleisten, müssen die Erodierelektroden 16 daher bedarfsweise rekonturiert werden. Fig. 4 zeigt hierzu eine schematische Perspektivansicht einer erfindungsgemäßen Haltevorrichtung 18 für ein Rekonturiersystem 20 (s. Fig. 6) zum Rekonturieren einer oder mehrerer Erodierelektroden 16. Die Haltevorrichtung 18 umfasst einen Grundkörper 22, welcher eine vorliegend T-förmige Montageöffnung 24 aufweist, durch die eine oder mehrere Erodierelektroden 16 durchgesteckt werden können. Wie insbesondere in Fig. 5 erkennbar ist, weist der Grundkörper 22 zudem an seiner Unterseite eine Halteeinrichtung 26 zum Halten eines als Opferanode verwendbaren Opferelements 28 (s. Fig. 6) an der Haltevorrichtung 18 auf. Die Halteeinrichtung 26 fungiert dabei als eine Art Einschub bzw. Schiebeführung, so dass das Opferelement 28 rein translatorisch in die Halteeinrichtung 26 hinein- und aus der Halteeinrichtung 26 herausgeschoben werden kann. Weiterhin kann das Opferelement 28 in Abhängigkeit seiner Ausgestaltung innerhalb der Halteeinrichtung 26 neu positioniert werden, um beispielsweise nicht-erodierte Bereiche unter der zu rekonturierenden Erodierelektrode 16 anzuordnen.

Die Bewegung des Opferelements 28 in die Halteeinrichtung 26 wird im gezeigten Ausführungsbeispiel durch einen grundsätzlich optionalen Anschlag 30 begrenzt. Zum Festlegen des Opferelements 28 weist die Haltevorrichtung 18 an der Unterseite des Grundkörpers 22 sowie an den Seiten der Halteeinrichtung 26 mehrere Federelemente 32 auf, mittels welchen das in der Halteeinrichtung 26 angeordnete Opferelement 28 nach Art einer Klemmvorrichtung mit einer Haltekraft beaufschlagt werden kann. Alternativ oder zusätzlich kann das Opferelement 28 mit Hilfe der Federelemente 32 gegen das Werkstück 38 gedrückt werden, so dass das Opferelement 28 mit seiner der Erodierelektrode 16 abgewandten Seite flächig auf dem Werkstück 38 aufliegt. Hierdurch kann zuverlässig vermieden werden, dass sich zwischen dem Opferelement 28 und dem Werkstück 38 Spalte bilden, welche zu Problemen beim Rekonturieren und bei anschießenden Erodierverfahren führen könnten. Darüber hinaus erleichtert das An- bzw. Aufliegen des Opferelements 28 an bzw. auf dem als Anode geschalteten Werkstück 38 dessen Verwendung als Opferanode.

Zum Festlegen der Haltevorrichtung 18 weist der Grundkörper 22 weiterhin mehrere Montagebohrungen 34 auf, welche zum Verschrauben, Vernieten etc. der Haltevorrichtung 18 verwendet werden können. Zur Durchführung des erosiven Rekonturierens und eines gegebenenfalls daran anschließenden Erodierverfahrens, zum Kühlen der Haltevorrichtung 18 sowie zum Abtransport von erodiertem Material umfasst der Grundkörper 22 im Bereich der Halteeinrichtung 26 mehrere seitliche Kühlkanäle 36, die den Zu- und Austritt von Kühlmedium zum Opferelement 28 erlauben. Ein Zu- und Austritt von Kühlmedium ist auch durch eine zentrale Öffnung im Anschlag 30 sowie in Einschubrichtung des Opferelements 28 möglich.

Fig. 6 zeigt eine schematische Perspektivansicht eines erfindungsgemäßen Rekonturiersystems 20 und wird in Zusammenschau mit Fig. 7 erläutert werden, in welcher eine schematische seitliche Schnittansicht des Rekonturiersystems 20 gezeigt ist. Man erkennt, dass im gezeigten Ausführungsbeispiel zwei quaderförmige Erodierelektroden 16 durch schlitzförmige Montageöffnungen 24 im Grundkörper 22 der Haltevorrichtung 18 gesteckt sind. In die Halteeinrichtung 26 ist ein vorliegend als rechteckiges Opferblech ausgebildetes Opferelement 28 eingeschoben. Die Haltevorrichtung 18 ist zudem an einem zu bearbeitenden Werkstück 38 angeordnet und kann mittelbar oder unmittelbar an diesem festgelegt sein. Dabei kann grundsätzlich vorgesehen sein, dass die Haltevorrichtung 18 beweglich am Werkstück 38 und/oder an den Erodierelektroden 16 gelagert ist und nur bedarfsweise in die gezeigte Position verschwenkt, verschoben oder anderweitig bewegt wird. Alternativ kann die Haltevorrichtung 18 dauerhaft in der gezeigten Position angeordnet bleiben. Bei dem Werkstück 38 kann es sich beispielsweise um das in Fig. 1 gezeigte Schaufelsegment 10 handeln. Wie insbesondere in Fig. 7 erkennbar ist, ragen die Enden der Erodierelektroden 16 über das Werkstück 38 hinaus. Weiterhin erkennt man in Fig. 7 Schiebeführungselemente 40 der Halteeinrichtung 26, die als Auflage und Schiebeführung für das Opferelement 28 dienen. Von oben wird das Opferelement 28 mittels der Federelemente 32 gegen die Schiebeführungselemente 40 gedrückt und in seiner eingestellten Position gehalten. Zusammen mit den flächig angeordneten Federelementen 32 und dem Werkstück 38 verhindern die Schiebeführungselemente 40 zudem ein Verbiegen des Opferelements 28 und sorgen für eine flächige Auflage des Opferelements 28 am Werkstück 38.

Fig. 8 zeigt eine schematische Perspektivansicht des in Fig. 1 dargestellten Schaufelsegments 10, welches als Werkstück 38 für ein Erodierverfahren dient und an welchem das in Fig. 6 und Fig. 7 gezeigte Rekonturiersystem 20 angeordnet ist. Man erkennt, dass das Rekonturiersystem 20 Führungsmittel 42 umfasst, mittels welchen die Haltevorrichtung 18 relativ zum Werkstück 38 positioniert und in der eingestellten Position am Werkstück 38 festgelegt wird. In Abhängigkeit des jeweiligen Erosionsprozesses kann vorgesehen sein, dass die relative Anordnung der Haltevorrichtung 18 gegenüber dem Werkstück 38 während des Erodierens mit Hilfe der Führungsmittel 42 ein- oder mehrfach verändert wird.

Fig. 9 zeigt eine schematische seitliche Schnittansicht des Rekonturiersystems 20 mit einer verschlissenen Erodierelektrode 16. Man erkennt, dass die Erodierelektrode 16 durch das weiterhin in der Halteeinrichtung 26 angeordnete und im Rahmen des Rekonturierens der Erodierelektrode 16 durcherodierte Opferelement 28 hindurchragt und aufgrund des erosiven Materialabtrags im Werkstück 38 insbesondere in den mit IX gekennzeichneten Bereichen eine stark von einer planen Soll-Fläche abweichende Ist-Fläche aufweist und daher rekonturiert werden muss. Da das Opferelement 28 im Rahmen des vorhergehenden Rekonturierens vollständig durcherodiert wurde, muss es während des Erodierverfahrens vorteilhafter Weise nicht aus der Halteeinrichtung 26 entnommen werden. Hierdurch ergeben sich erhebliche Zeit-, Personal- und Kostenvorteile.

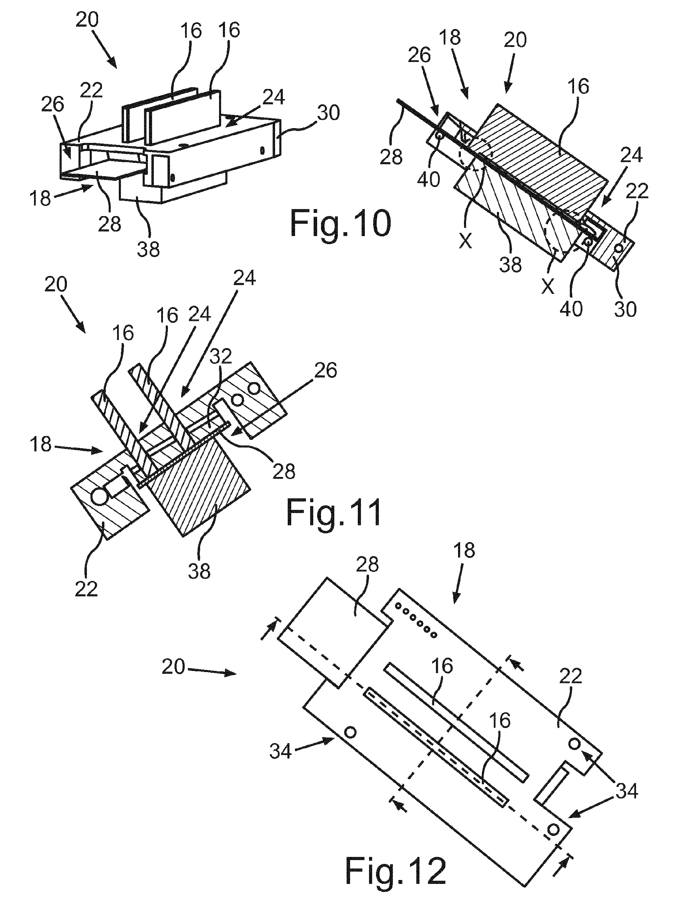

Zum erneuten Rekonturieren der Erodierelektrode(n) 16 wird das bereits bereichsweise durcherodierte Opferelement 28 derart in der Halteeinrichtung 26 positioniert, dass ein nichterodierter Bereich des Opferelements 28 zwischen der Erodierelektrode 16 bzw. den Erodierelektroden 16 und dem Werkstück 38 angeordnet ist. Alternativ kann das durcherodierte Opferelement 28 gegen ein neues Opferelement 28 ausgetauscht werden. Anschließend werden ähnlich wie beim eigentlichen Erodierverfahren Spannungspulse zwischen der Erodierelektrode 16 bzw. den Erodierelektroden 16 und dem Opferelement 28 erzeugt, so dass die Erodierelektrode(n) 16 durch teilweise Erosion der Erodierelektrode(n) 16 einerseits und durch zumindest bereichsweise vollständige Durcherosion des Opferelements 28 andererseits rekonturiert wird. Fig. 10 zeigt hierzu eine schematische Perspektivansicht sowie eine schematische seitliche Schnittansicht des Rekonturiersystems 20, welche insbesondere die relative Anordnung der Erodierelektrode(n) 16, des Opferelements 28 und des Werkstücks 38 zu Beginn des Rekonturierens verdeutlichen. Zur weiteren Verdeutlichung zeigt Fig. 11 einen schematischen Querschnitt durch das Rekonturiersystem 20 zu Beginn des Rekonturierens der Erodierelektroden 16, während Fig. 12 eine schematische Aufsicht des Rekonturiersystems 20 während des Rekonturierens der Erodierelektroden 16 zeigt. Die Dicke des Opferelements 28 ist dabei derart gewählt, dass die Erodierelektroden 16 spätestens bei Erreichen des durcherodierte Zustands des Opferelements 28 rekonturiert sind. Somit ist auf konstruktiv einfache Weise sichergestellt, dass die Erodierelektroden 16 wieder die gewünschte Kontur aufweisen, wenn sie im Rahmen des anschließenden Erodierverfahrens in Wirkverbindung mit dem unmittelbar unter dem Opferelement 28 angeordneten Werkstück 38 treten.

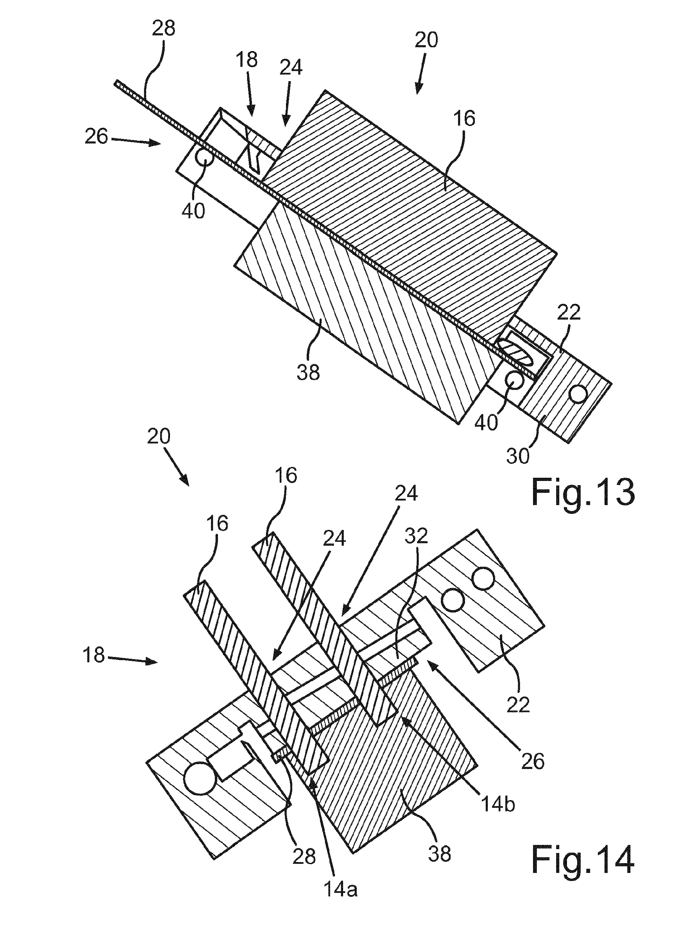

Fig. 13 zeigt eine schematische seitliche Schnittansicht des Rekonturiersystems 20 nach beendeter Rekonturierung der Erodierelektroden 16. Der zum Rekonturieren erforderliche Materialabtrag an den Erodierelektroden 16 kann dabei minimal gehalten werden, wodurch sich beispielsweise im Unterschied zu mechanischen Rekonturierungsmaßnahmen eine wesentliche Verlängerung der Lebensdauer der Erodierelektroden 16 ergibt. Auch aufgrund des berührungsfreien Rekonturierungsverfahrens ist eine Beschädigung der Erodierelektroden 16 ausgeschlossen. Man erkennt, dass die Erodierelektroden 16 in ihrem dem Werkstück 38 zugewandten Bereich nunmehr wieder eine plane Fläche aufweisen und unmittelbar für die erosive Bearbeitung des Werkstücks 38 verwendet werden können. Darüber hinaus ist sichtbar, dass die rekonturierten Erodierelektroden 16 durch die im durcherodierten Opferelement 28 gebildeten Öffnungen ragen und somit im Nahbereich der zu bearbeitenden Oberfläche des Werkstücks 38 angeordnet sind.

Fig. 14 zeigt einen schematischen Querschnitt durch das Rekonturiersystem 20 während eines an das Rekonturieren anschließenden Erodierverfahrens, wobei erkennbar ist, dass die Erodierelektroden 16 zum Herstellen der Dichtschlitze 14a, 14b in das Werkstück 38 eingesenkt sind, wobei sie das durcherodierte Opferelement 28 durchgreifen.

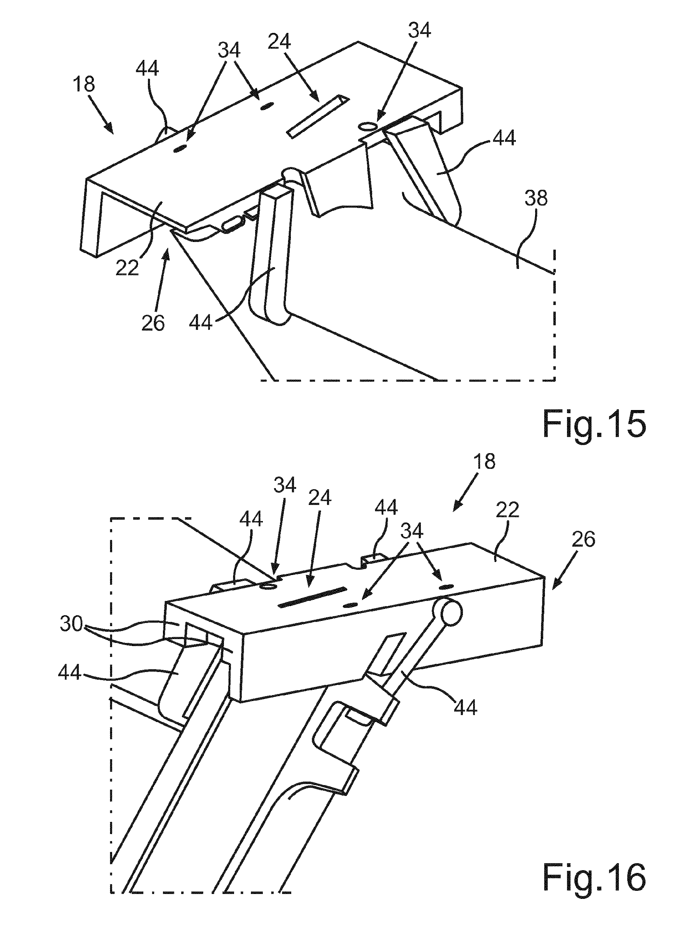

Fig. 15 und Fig. 16 zeigen aus unterschiedlichen Blickwinkeln schematische Perspektivansichten einer weiteren Ausführungsform der Haltevorrichtung 18. Die Haltevorrichtung 18 ist mit Halteelementen 44 versehen, mittels welchen die Haltevorrichtung 18 lösbaren am zu bearbeitenden Werkstück 38 festgelegt werden kann. Die Halteelemente 44 können in Abhängigkeit der Geometrie des Werkstücks 38 beweglich an der Haltevorrichtung 18 gelagert oder feststehend ausgebildet sein. Man erkennt, dass die Geometrie des Grundkörpers 22 vorteilhaft an die Geometrie des zu bearbeitenden Werkstücks 38 angepasst ist. Wie insbesondere in Fig. 16 erkennbar ist, können die Halteelemente 44 vorzugsweise derart ausgebildet werden, dass sie sich spezifische Geometrien des zu bearbeitenden Werkstücks 38 zum Festlegen der Haltevorrichtung 18 zunutze machen.

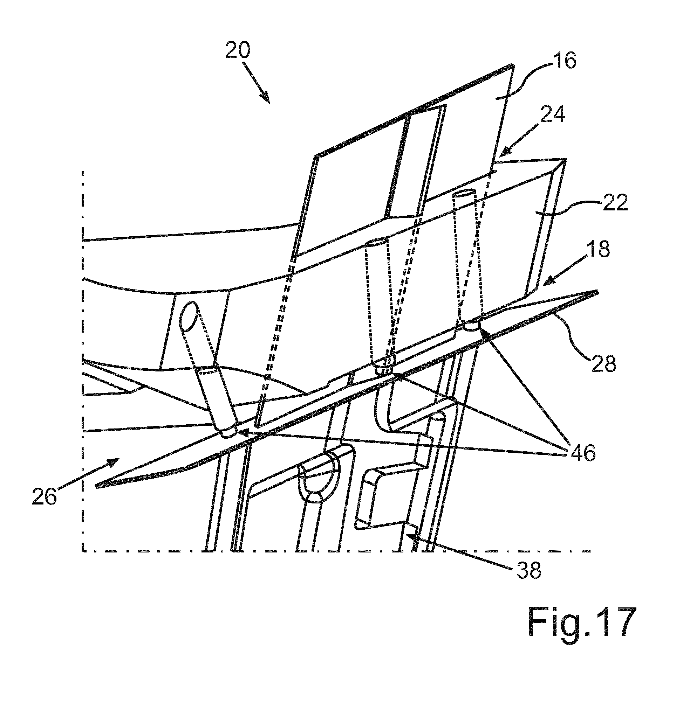

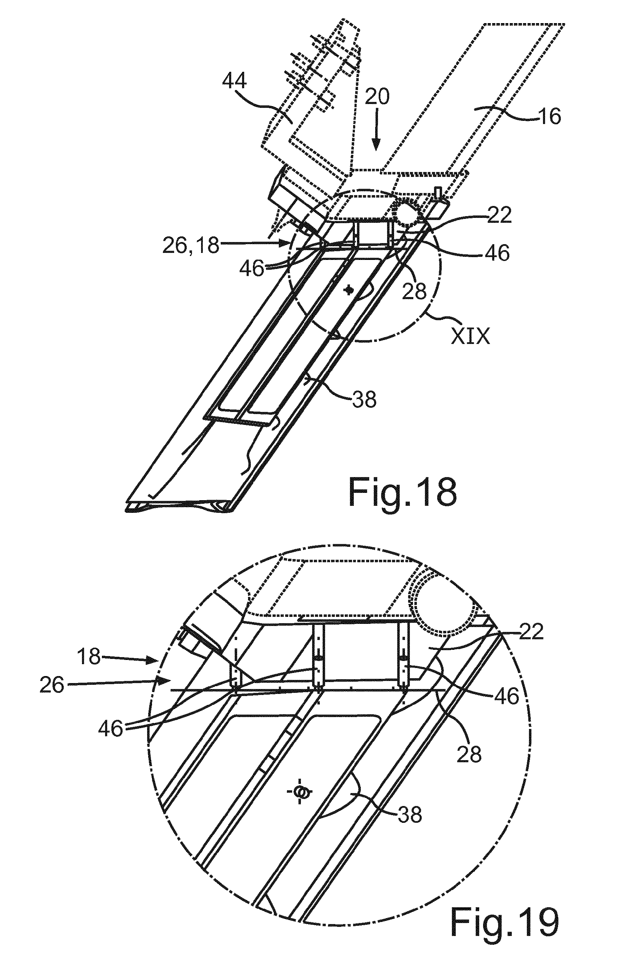

Fig. 17 zeigt eine schematische Perspektivansicht eines weiteren Ausführungsbeispiels des Rekonturiersystems 20, das an einem Werkstück 38 angeordnet ist. Bei dem gezeigten Werkstück 38 handelt es sich um eine Schaufel einer Turbine. Fig. 17 wird im Folgenden in Zusammenschau mit Fig. 18 und Fig. 19 erläutert werden, wobei Fig. 18 eine schematische Schnittansicht der in Fig. 17 gezeigten Anordnung des Rekonturiersystems 20 am Werkstück 38 und Fig. 19 eine vergrößerte Ansicht des in Fig. 18 gezeigten Details XIX zeigen. Im Unterschied zu den vorstehend beschriebenen Ausführungsbeispielen weist das Rekonturiersystem 20 bzw. seine Haltevorrichtung 18 im gezeigten Ausführungsbeispiel mehrere Klemmschrauben 46 auf, mittels welchen das in der Haltevorrichtung 18 angeordnete Opferelement 28 lösbar an der Haltevorrichtung 18 festgelegt ist. Dies stellt eine konstruktiv besonders einfache Möglichkeit dar, um das Opferelement 28 nach seiner Positionierung festzulegen und bei Bedarf wieder zu lösen. Grundsätzlich sind jedoch auch weitere Varianten und Kombinationen von Halteelementen zum Festlegen des Opferelements 28 möglich. Beispielsweise können anstelle von oder zusätzlich zu den Klemmschrauben 46 federbelastete Klemmstifte (nicht gezeigt) oder dergleichen vorgesehen sein.

## Patentansprüche

1. Verfahren zum Rekonturieren wenigstens einer Erodierelektrode (16), die zum erosiven Materialabtrag durch Spannungspulse im Bereich eines zu bearbeitenden Werkstücks (38) angeordnet wird, **dadurch gekennzeichnet, dass** zwischen der Erodierelektrode (16) und dem Werkstück (38) ein Opferelement (28) angeordnet wird, wonach durch Anlegen einer Spannung so lange eine Rekonturierung der Erodierelektrode (16) durch Erosion einer dem Opferelement (28) zugewandten Fläche der Erodierelektrode (16) an dem als Opferanode fungierenden Opferelement (28) durchgeführt wird, bis das Opferelement (28) durcherodiert ist.

2. Verfahren nach Anspruch 1, **dadurch gekennzeichnet, dass** das Opferelement (28) zum Rekonturieren der Erodierelektrode (16) mittels einer Haltevorrichtung (18) zwischen der Erodierelektrode (16) und dem Werkstück (38) angeordnet wird und/oder dass das Opferelement (28) nach dem Rekonturieren in der Haltevorrichtung (18) belassen wird.

3. Verfahren nach Anspruch 1 oder 2, **dadurch gekennzeichnet, dass** ein Opferelement (28) mit einer mehreckigen und/oder runden und/oder ovalen Querschnittsgeometrie verwendet wird.

4. Verfahren nach einem der Ansprüche 1 bis 3, **dadurch gekennzeichnet, dass** das Opferelement (28) während des Rekonturierens am Werkstück (38) anliegt.

5. Verfahren nach einem der Ansprüche 1 bis 4, **dadurch gekennzeichnet, dass** ein Opferelement (28) verwendet wird, welches aus dem gleichen Material wie die Erodierelektrode (16) besteht und/oder welches aus einem Material besteht, das ausgewählt ist aus einer Gruppe, die Wolframkarbid, Wolfram-Kupfer-Legierungen, Wolfram-Silber-Legierungen, Wolfram, Kupfer, Messing, Hartmetalle, Graphit, Zink-Legierungen und Chrom-plattierte Materialien umfasst.

6. Verfahren nach einem der Ansprüche 1 bis 5, **dadurch gekennzeichnet, dass** eine relative Anordnung zwischen der Erodierelektrode (16) und dem Opferelement (28) während des Rekonturierens wenigstens einmal verändert wird.

7. Verfahren nach einem der Ansprüche 1 bis 6, **dadurch gekennzeichnet, dass** ein Opferelement (28) verwendet wird, welches eine Oberflächenkontur aufweist, die an eine Oberflächenkontur der zu rekonturierenden Erodierelektrode (16) angepasst ist.

8. Verfahren nach einem der Ansprüche 1 bis 7, **dadurch gekennzeichnet, dass** als Werkstück (38) ein aerodynamisches Strukturbauteil, insbesondere eine Schaufel und/oder ein Schaufelsegment (10) eines Verdichters und/oder einer Turbine und/oder eines Kompressors verwendet wird.

9. Verfahren nach einem der Ansprüche 1 bis 8, **dadurch gekennzeichnet, dass** die Erodierelektrode (16) nach dem Rekonturieren zum Erodieren des Werkstücks (38), insbesondere zum Herstellen eines Dichtschlitzes (14a, 14b) im Werkstück (38) verwendet wird.

10. Rekonturiersystem (20) zum Rekonturieren wenigstens einer Erodierelektrode (16), die zum erosiven Materialabtrag durch Spannungspulse im Bereich eines zu bearbeitenden Werkstücks (38) anordenbar ist, umfassend eine Haltevorrichtung (18), welche einen Grundkörper (22) mit wenigstens einer Montageöffnung (24) zum Anordnen der Erodierelektrode (16) an der Haltevorrichtung (18) und wenigstens eine Halteeinrichtung (26) zum Halten eines Opferelements (28) an der Haltevorrichtung (18) aufweist, wobei das Rekonturiersystem (20) ausgelegt ist, das Opferelement (28) als Opferanode zwischen der Erodierelektrode (16) und dem Werkstück (38) anzuordnen und das Opferelement (28) unter Erosion einer dem Opferelement (28) zugewandten Fläche der Erodierelektrode (16) durchzuerodieren.

11. Rekonturiersystem (20) nach Anspruch 10, **dadurch gekennzeichnet, dass** der Grundkörper (22) der Haltevorrichtung (18) wenigstens eine Montagebohrung (34) und/oder wenigstens ein Halteelement (44) zum lösbaren Festlegen der Haltevorrichtung (18) am Werkstück (38) umfasst.

12. Rekonturiersystem (20) nach Anspruch 10 oder 11, **dadurch gekennzeichnet, dass** die Haltevorrichtung (18) wenigstens ein Federelement (32) umfasst, mittels welchem das in der Halteeinrichtung (26) angeordnete Opferelement (28) mit einer Haltekraft beaufschlagbar ist und/oder dass die Haltevorrichtung (18) wenigstens eine Klemmschraube (46) umfasst, mittels welcher das in der Halteeinrichtung (26) angeordnete Opferelement (28) lösbar an der Halteeinrichtung (26) festlegbar ist.

13. Rekonturiersystem (20) nach einem der Ansprüche 10 bis 12, **dadurch gekennzeichnet, dass** die Montageöffnung (24) eine mit einer Querschnittskontur der Erodierelektrode (16) korrespondierende Querschnittskontur und/oder eine schlitzartige, T-förmige, L-förmige, C-förmige, S-förmige, runde, ovale oder mehreckige Querschnittskontur aufweist.

14. Rekonturiersystem (20) nach einem der Ansprüche 10 bis 13, **dadurch gekennzeichnet, dass** dieses Führungsmittel (44) umfasst, mittels welchen die Haltevorrichtung (18) relativ zum Werkstück (38) positionierbar und in der eingestellten Position festlegbar ist.

15. Verwendung eines Verfahrens nach einem der Ansprüche 1 bis 9 und/oder eines Rekonturiersystems (20) nach einem der Ansprüche 10 bis 14 bei der Herstellung wenigstens eines Dichtschlitzes (14a, 14b) in einem aerodynamischen Strukturbauteil, insbesondere im Rahmen eines Triebwerksbaus, bei Herstellung einer Turbine, insbesondere einer Gasturbine, und/oder bei der Herstellung eines Kompressors.
